# EUROPEAN PATENT APPLICATION

(11) **EP 1 281 436 A1**
(43) Date of publication of application: **05.02.2003**
(21) Application number: 01919794.6
(22) Date of filing: 05.04.2001
(51) Int. Cl.: B01J 20/26, G01N 30/48, B01D 15/08

(54) **NOVEL MATERIAL FOR USE IN SEPARATION AND SEPARATING METHOD USING THE SAME**

(30) Priority: 05.04.2000 JP 2000104016
(71) Applicant: Japan Chemical Innovation Institute, Tokyo 111-0052 (JP); National Institute of Advanced Industrial Science and Technology, Tokyo 100-0013 (JP)
(72) Inventor: AKIYAMA, Yoshikatsu, Shinagawa-ku, Tokyo 142-0041 (JP); YOSHIZAKO, Kimihiro, Tsukuba-shi, Ibaraki 305-0046 (JP); OKANO, Teruo, Ichikawa-shi, Chiba 272-0827 (JP); UENO, Katsuhiko, Tsukuba-shi, Ibaraki 305-0042 (JP)
(74) Representative: Hammett, Audrey Grace Campbell
(86) International application number: JP0102960
(87) International publication number: WO01074482

(57) **Abstract**

A separatory material comprising a composite material containing a stimulus-responsive polymer and a substance interacting specifically with a target substance, wherein said stimulus-responsive polymer undergoes a structural change upon a physical stimulus so that the interaction of said substance interacting specifically with the target substance is affected by the chemical or physical environmental change, thereby causing a reversible change in the interaction force with the target substance due to the physical stimulus, which separatory material is characterized in that said stimulus-responsive polymer has no affinity with said substance interacting specifically with the target substance.

## Description

### Technical Field

This invention relates to a separatory material such as a packing which is capable of separating a target substance (metal ions, drugs, biological components, etc.) with the use of a separatory material wherein the interaction force of a substance (ligand) interacting with the target substance can be reversibly changed in an aqueous system due to a structural change or a polarity change of a stimulus-responsive polymer under a physical stimulus and wherein the stimulus-responsive polymer has no affinity with the substance interacting specifically with the target substance, and to a novel separation method for separating a target substance with the use of the separatory material.

### Background Art

The most effective and efficient means employed at present for separating and purifying biological components and drugs include ion exchange chromatography, reversed phase chromatography, affinity chromatography, etc. In recent years, biotechnology procedures have made remarkable advances and physiologically active substances (recombinant proteins, glycoproteins, etc.) are produced thereby on a mass scale. Under these circumstances, there is a growing requirement for methods by which these substances can be quickly and efficiently separated and purified without inactivation.

In the chromatographic techniques as cited above, however, target substances (biological components, drugs, recombinant proteins, glycoproteins, etc.) are eluted by changing salt concentration, organic solvent concentration, pH value, etc. of eluents. It is known that, in such a case, the pH value, organic solvent, etc. frequently bring about severe conditions for the target substance and thus lower the recovery yield thereof. In addition, the salt, organic solvent, pH-condition, etc. employed in eluting the target substance should be finally eliminated by desalting, drying, etc. Therefore, an additional step is required, after the completion of the separation and purification of the target substance, to perform an operation for eliminating the salt, organic solvent, pH, etc. As a result, the activity and yield of the final product are often lowered.

When the target substance is eluted by a chemical means with the use of a salt, an organic solvent, pH, etc., the chemicals (i.e., the salt, organic solvent, pH, etc.) contained in the eluent causes the above-mentioned problems of inactivation, a decrease in the yield, etc. It is expected that instead of elution by a chemical means if a physical change induced by, for example, heat, light or a magnet could affect the elution of a target substance, the target substance would be eluted by a physical means, thus solving the problems of inactivation, a decrease in the yield, etc.

Recently, separatory materials comprising stimulus-responsive polymers covalently bound to ion exchanging groups have been described. See for instance JP Application 98/140722 and corresponding WO 99/61904.

Galaev et al. (J.Chromatog.A 684 (1994) 37-43) describe temperature elution of lactate dehydrogenase (LDH) in a chromatographic system in which a dye (ligand) is covalently bound to a base matrix which also carries a physically adsorbed temperature responsive polymer.

Hofman et al. (WO 87/06152) describe a separation method in which the ligand is bound to a temperature responsive polymer. Binding and elution of a target substance occur at the same side of the critical solution temperature.

There are also a number of publications describing chromatography based on separation material comprising stimulus-responsive polymers but without having a ligand covalently bound to a temperature-responsive polymer. Gawehr et al. (Macromolecular Chemistry and Physics 193 (1992) 249-256) describe gel chromatography on porous silica beads coated with a temperature-responsive polymer. Hosoya et al. (Anal. Chem. 67 (1995) 1907-1911); Yamamoto et al. (Proc. 114th National Meeting of the Pharmaceutical Society of Japan, Tokyo (1994) 160; Kanazawa et al. (Yakugaku Zasshi 117 (10-11) (1997) 817-824; Kanazawa et al. (Anal. Chem. 68(1) (1996) 100-105); Kanazawa et al. (Anal. Chem. 69(5) (1997) 823-830); Kanazawa et al. (J. Pharm. Biomed. Anal. 15 (1997) 1545-1550); Yakushiji et al. (Langmuir 14(16) (1998) 4657-4662); Kanazawa et al. (Trends Anal. Biochem. 17(7) (1998) 435-440); Yakushiji et al. (Anal. Chem. 71(6) (1999) 1125-1130); Grace & Co (EP 534016); Okano (JP Public Disclosure 94/108643) all describe reversed phase chromatography on matrices covered with a thermoresponsive polymer for separation of biomolecules. The matrices may be porous. The hydrophobic groups utilized are inherent in the polymer as such. There is no description for ligands that has been covalently bound to the polymer after polymerization. On the other hand, Oonishi et al. (JP Public Disclosure 96/103653 and JP Public Disclosure 97/49830) describe that in response to physical stimulus, a copolymer comprising a stimulus-responsive polymer grafted on the surface of a base matrix and a ligand molecule having an affinity with a target substance can adsorb the target substance by the ligand molecule in a condition wherein the copolymer is compacting at a high temperature, and can desorb the target substance from the ligand molecule when the polymer expands at a low temperature. However, it is not easy to separate and purify very small amounts of the target substance from mixtures such as biological samples which are extremely complicated and wherein abundance (dynamic range of each component) is diverse. For instance, when a variety of compounds interact a ligand molecule having an affinity with a target substance, it is difficult to separate and purify the target substance in accordance with procedures described in JP Public Disclosures 96/103653 and 97/49830. Further, the working examples of the JP Public Disclosures 96/103653 and 97/49830 describe merely that cells having the size from about several to dozens of µm are used as a target substance. The disclosures do not indeed suggest a means for selecting and purifying the target substance from a mixture system comprising more than 2 kinds of compounds such as target substances, or small molecular weight of organic compounds, small molecular weight of peptides and proteins.

### Disclosure of Invention

From this point of view, the present inventors have conducted intensive studies and developments on the elution of a target substance by a physical means to thereby solve the above problems. As a result, they synthesized a composite material comprising a stimulus-responsive polymer and a ligand molecule by binding to a molecule (i.e., a ligand molecule) capable of interacting with a target substance to poly(N-isopropylacrylamide). Subsequently they have found out that use of this composite material makes it possible to obtain a separatory material capable of changing the interaction between the ligand molecule and the target substance under a physical stimulus. In addition, they have found out that the utilization of the expansion and compaction of the polymer makes it possible to absorb the target substance to the ligand molecule and desorb it from the ligand molecule, and further that the utilization of the polymer having small distribution of molecular weight makes it possible to induce an effective change of volume of the polymer, thereby fractionate the target substance according as its size, thus separate and purify the target substance. Therefore, they have found out that these can be attained by making the distribution of molecular weight (Mw/Mn) of the polymer small.

The present invention relates to a separatory material comprising a composite material containing a stimulus-responsive polymer and a substance interacting specifically with a target substance, wherein said stimulus-responsive polymer causes a structural change upon a physical stimulus so that the interaction of said substance interacting specifically with the target substance is affected by the chemical or physical environmental change, thereby causing a reversible change in the interaction force with the target substance due to the physical stimulus, which separatory material is characterized in that said stimulus-responsive polymer has no affinity with said substance interacting specifically with the target substance. This means that the target substance can be released from the ligand and also from the separatory material, thus effecting separation of the target substance from the composite material or separatory material. Further, this means that the use of the polymer having uniform distribution of molecular weight makes it possible to fractionate the target substance according as its size.

The present invention also relates to a separation method for separating a target substance characterized by use of the aforesaid separatory material. More specifically, the present invention relates to a method for separating substances characterized by comprising (a) binding a target substance on a stationary phase of a separatory material (including chromatographic packing) chemically modified with a composite material comprising a stimulus-responsive polymer and a substance (ligand) interacting specifically with the target substance; and (b) changing continuously or stepwise the temperature, preferably by external means, to thereby weaken the interaction between the ligand and the target substance, thus effecting separation. The mobile phase may be a liquid, for instance aqueous.

The present invention further relates to a separatory material (for example, a chromatographic packing).

The present invention still further relates to a method for separating a target substance comprising using the aforesaid packing.

### Brief Description of Drawings

Fig. 1 provides a difference spectrum to investigate the affinity between Cibacron Blue and poly(N-isopropyl acrylamide).
Fig. 2 provides a chromatogram showing the elution of BSA molecules held on CB molecules from a p(NIPAAm)-AmCB column with temperature change.
Fig. 3 provides a control chromatogram with the use of a p(NIPAAm) column.
Fig. 4 provides calibration curves of a packing on which a composite material having a different molecular weight is immobilized.

### Best Mode for Carrying Out the Invention

Another embodiment of the invention is a method for separating one or more target substances from a liquid. This embodiment comprises the steps of
(a) bringing a liquid sample (I) containing a target substance in contact with a separation medium/separatory material (including a chromatographic packing) which is functionalized with a ligand which is capable of binding to the target substance, said contact being under conditions permitting binding of said target substance to said ligand; and
(b) contacting said carrier with a ligand (II) not containing said at least one target substance under conditions such that the target substance is released from said ligand to liquid (II).

Between the steps (a) and (b) the liquid sample is preferably separated from the separatory material which in turn may be washed before the step (b). After the step (b), liquid (II) may be separated from the separatory material. The target substance, if so desired, may be worked up from the liquid (II).

With respect to target substances in the form of biological molecules such as those having nucleotide structure (including nucleic acids), polypeptide structure(including proteins), carbohydrate structure, steroid structure etc., the liquids used typically was aqueous. This embodiment of the invention is characterized in that
(i) said separatory material comprises a stimulus-responsive polymer as defined elsewhere in this specification, which polymer is functionalized with the ligand, preferably by covalent binding of the ligand after the polymer is formed,
(ii) subjecting in the step (a) and at least during binding of the target substance to the ligand, the separatory material to a stimulus at a level/intensity at which the stimulus-responsive polymer is in a conformation enhancing binding of the target substance to the ligand, and
(iii) subjecting in the step (b) and at least during release of the target substance from the ligand, the separatory material to a stimulus at a level/intensity at which the stimulus-responsive polymer is in a conformation hindering binding of the target substance to the ligand.

The level /intensity of the stimulus is opposite to the critical level/intensity for the stimulus-sensitive polymer used and other conditions applied in the respective step. The process can be made cyclic when the step (a) is repeated after the step (b), typically after extra washing/regeneration steps and equilibration steps. In this case, if the distribution of molecular weight of the polymer is small, the target substance can be fractionated in the step (b) according as its size.

Various embodiments of the inventive method may be carried out in a batch-wise or a chromatographic mode. Chromatographic modes, for instance, may be carried out by permitting the various liquids in plug flow (mobile phase) to pass through a bed of the separatory material while subjecting the bed to the appropriate stimulus for the individual steps and stimulus-responsive polymer used. The separatory material may be a porous monolith or packed or fluidized particles. Batch-wise modes in particular concerns suspended particles in combination with turbulent flow and/or liquids.

The physical stimulus to be used in the method according to the present invention is exemplified by temperature. Namely, the molecular-recognizability of a substance interacting with a target substance can be changed under a temperature change by using, for example, a composite material comprising a heat-responsive polymer. As an example thereof, a chromatographic packing chemically modified with a composite material of a polyalkylamide having a terminal functional group, for example, amino, carboxyl or hydroxyl group may be cited. A chemically modified carrier is exemplified by a silica carrier.

Depending on the particular stimulus-responsive polymer used other stimulus may be applied, for instance, light, magnetic field, electrical field, vibration etc. Stimulus-responsive polymers are often called "intelligent polymers".

Stimulus-responsive polymers are characterized in that upon being subjected to the correct stimulus of the correct intensity or level (critical level of stimulus or critical intensity of stimulus) they undergo a conformational and reversible change of their physicochemical properties. The change may be a switch from a pronounced hydrophobicity to a pronounced hydrophilicity or vice versa. The exact level/intensity and kind of the required stimulus depend on the structure of the polymer and will often also depend on other conditions (solvent, solutes such as salts etc.). The most well-known and most utilized polymers of this kind respond to heat (thermoresponsive or temperature-responsive polymers). Temperature-responsive polymers are recognized by having a sharp temperature limit at which they switch from a pronounced hydrophilic state to a pronounced hydrophobic state and vice versa. For a temperature-responsive polymer in solution the change in conformation/physico-chemical properties occurs at the so-called critical solution temperature (CST).

For a temperature responsive polymer in aqueous media there is a lower critical solution temperature (LCST) or an upper critical solution temperature (UCST). For a polymer having a LCST, the polymer change from a hydrophilic conformation to a hydrophobic conformation when the temperature is passing the LCST from below. For a polymer having an UCST, the change is the opposite when the temperature is passing the UCST from below. The exact value of the LCST and UCST depend on the polymer and also on other conditions applied (solvent, other solutes etc.).

As described above, one of the characteristic features of the invention when a temperature-sensitive polymer is used is that the binding to and the release from the ligand are performed at opposite sides of an applicable CST.

The stimulus-responsive polymer preferably has an insignificant affinity for the target substance compared to the affinity between the target substance and the covalently bound ligand. Preferably there is no significant affinity between the ligand and the thermoresponsive polymer.

Examples of the fundamental constituent unit of the temperature-responsive polymer include homopolymers and copolymers of N-alkyl(meth)acrylamide such as N-isopropyl-(meth)acrylamide, N-(meth)acryloylpiperidine, N-propyl-(meth)acrylamide, N,N-diethyl(meth)acrylamide, N-cyclo-propyl(meth)acrylamide, N-(meth)acryloylpyrrolidine, N,N-ethylmethyl(meth)acrylamide and N-ethyl(meth)acrylamide, and copolymers thereof with monomers containing functional groups such as carboxyl, amino, hydroxysuccimido, thiol, imino and epoxy groups for ensuring chemical composition with molecules interacting with target substances.

Examples of the polyalkylacrylamide to be used in the method according to the present invention include poly(N-isopropylacrylamide)-dye composite materials.

Examples of the target substance and the molecule interacting with the target substance include biological components composed of amino acids, saccharides, nucleic acids, etc. and organic compounds having a molecular weight of not more than 1,000. Although the amount of the ligand molecule to be chemically composed with the stimulus-responsive polymer may be arbitrarily controlled, it preferably amounts to 0.1 to 50 % based on the whole composite. The physical or chemical properties of the stimulus-responsive polymer can be varied by controlling the amount of the molecule interacting with the target substance to be composed therewith. For example, a poly(N-isopropylacrylamide) homopolymer has a low limit critical temperature of about 32°C which can be varied by controlling the amount of the molecule interacting with the target substance to be composed therewith. In this case, the distribution of molecular weight (Mw/Mn) of the polymer immobilized on the base matrix is preferably no more than 3. When the distribution of molecular weight is not less than 3, it is not easy to separate the target substance based on its molecular weight or size due to the presence of polymers with a variety of molecular weight.

### Separatory materials (e.g. chramatographic packings)

The separatory material to be used in the inventive method comprises a base matrix (carrier) which may be based on organic and/or inorganic material. When the liquid used is aqueous, the base matrix is preferably hydrophilic. This in particular applies to target substances that are biomolecules of the kind as described above.

The base matrix is preferably a polymer, which preferably is insoluble and more or less swellable in water. Hydrophobic polymers that are derived to become hydrophilic are included in this definition. Suitable polymers are polyhydroxy polymers, e.g. based on polysaccharides such as agarose, dextran, cellulose, starch, pullulan, etc., synthetic polymers, (e.g. polyacrylic acid amide, polymethacrylic acid amide, poly(hydroxyalkylvinyl ethers, poly(hydroxyalkylacrylate) and polymethacrylate (e.g. polyglycidylmethacrylate), polyvinylalcohol and polymers based on styrenes and divinylbenzenes), and copolymers in which two, three or more of the monomers corresponding to the above-mentioned polymers are included. Polymers, which are soluble in water, may be modified, e.g. by cross-linking and by coupling to an insoluble body via adsorption or covalent binding, to become insoluble. Hydrophilic groups can be introduced on hydrophobic polymers (e.g. on copolymers of monovinyl and divinylbenzenes) by polymerization of monomers exhibiting groups which can be converted to OH, or by hydrophilization of the final polymer, e.g. by adsorption of suitable compounds, such as hydropgilic polymers.

Suitable inorganic materials to be used as base matrices are silica, zirconium oxide, graphite, tantalum oxide etc.

Preferred matrices lack groups that are unstable against hydrolysis, such as silane, ester, amide groups and groups present in silica as such.

The matrix may be porous or non-porous. This means that the matrix may be fully or partially permeable (porous) or completely impermeable (non-porous) to the compound to be removed.

The pores may have sizes □0.1 µm (e.g. □0.5 µm) by which is meant that a sphere □0.1 µm (e.g. □0.5 µm) in diameter is able to pass through. An applied liquid may be able to flow through this kind of pore system (penetrability). When the support matrix is in the form of beads packed to a separatory material, the ratio between the pore sizes of the penetrating pore system and the diameter of the particles typically is 0.01-0.03, preferably 0.05-0.2. The pores having sizes □0.1 µm (e.g. □0.5 µm) are often called macropores.

The base matrix may also have pores with sizes □0.5 µm (e.g. □0.1 µm) by which is meant that only spheres with diameters □0.5 µm (e.g. □0.1 µm) can pass through. The pores having sizes □0.5 µm (e.g. □0.1 µm) are often called micropores.

In a particularly interesting embodiment of the present invention, the base matrix is in the form of irregular or spherical particles with sizes in the range of 1-1000 µm, preferably 5-50 µm for high performance applications and 50-300 µm for preparative purposes.

The base matrix may also be in the form of a monolith having at least macropores as defined above. Alternative geometric forms are the interior walls of tubes and the like.

The stimulus responsive polymer as defined above may be bound to the base matrix on its outer surfaces and/or on its interior surfaces (macropore and/or micropore surfaces). It may also be part of the polymer constituting the base matrix as such. The stimulus responsive polymer may be bound to the base matrix by physical adsorption and/or covalent attachment, preferably the latter.

### Ligands

Ligands may be bound to the stimulus responsive polymer either before or after the polymer has been bound to or incorporated into the base matrix. Binding to the stimulus polymer may be by affinity bonds or by covalent bonds, preferably the latter. One typical kind of ligands binds to the target substance by more or less pure ionic (electrostatic) interactions. Alternatively, the binding includes more complex interactions such as affinity binding (affinity adsorption). For ionic interactions the ligands comprise positively or negatively charged entities (ion exchange; the immobilized entity being selected among primary amine, secondary amine, tertiary amine and quaternary ammonium, sulphate, phosphonate, phosphate, carboxy etc, groups). More complex interactions are illustrated by the ligand which is one of affinity members in the pairs.
(a) antibodies and antigens/haptens.
(b) lectins and carbohydrate structures.
(c) IgG binding proteins and IgG.
(d) polymeric chelators and chelates.
(e) complementary nucleic acids.

Affinity members also include entities participating in catalytic reactions, for instance enzymes, enzyme substances, cofactors, cosubstrates etc. Members of cell-cell and cell-surface interactions and synthetic mimetics of bioproduced affinity members are also included. The term ligand also includes more or less complex organic molecules, for instance dyes, that bind through affinity to complex biomolecules, for instance having oligo or polypeptide structures (including proteins), oligo and polynucleotide structure (including nucleic acids), oligo or polysaccharide structures etc.

### Examples

The present invention will now be explained in more detail with reference to examples which are not intended to limit the present invention.

### Example 1

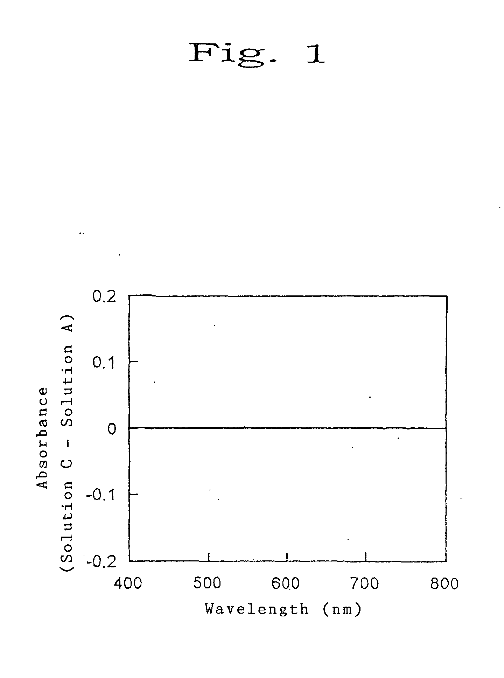

Cibacron Blue was dissolved in a 67 mM phosphoric acid buffer solution having a pH of 7.0 such that the concentration came to 9.95 µM to prepare a solution A. A poly(N-isopropyl acrylamide) having a number average molecular weight of 4,700 was dissolved in a 67 mM phosphoric acid buffer solution having a pH of 7.0 such that the concentration came to 10.5 mM that was used to prepare a solution B. The difference in the spectrum of solution A relative to a solution C obtained by adding 5 µL of solution B to 2 mL of solution A was found to determine whether there is an affinity between Cibacron Blue and the poly(isopropyl acrylamide) or not. Fig. 1 shows the difference in the spectrum. From 400 nm to 800 nm, no difference in the spectrum between solution C and solution A was found and thus, it became clear that there is no affinity between Cibacron Blue and the poly(N-isopropyl acrylamide).

### Example 2

Bovine serum albumin (BSA) used as the target substance and Cibacron Blue (CB) as the molecule interacting with the target substance were made up with a heat-responsive polymer and the change in interaction with the target substance by a temperature stimulus was evaluated by a chromatographic technique. As a result, it was confirmed that the interaction changed by a temperature change to dissociate the CB molecular from BSA.

### 1. Synthesis of Polymer

### (1-1-a) Synthesis of Poly(N-isopropyl acrylamide/N-acryloxy- succinimide) [hereinafter referred to as Poly(IPAAm-co-ASI)] Having Terminal Carboxyl Group

In a polymerization tube were charged 15 g of N-isopropyl acrylamide, 1.24 g of N-acryloxy succinimide as the monomer having a functional group, 0.28 g of mercaptopropionic acid (MPA) as the chain transfer agent, 82 mg of 2,2-azobisisobutyronitrile (AIBN) as the polymerization initiator and 500 ml of tetrahydrofuran (THF), and the polymerization tube with the cock closed was placed in liquid nitrogen and completely frozen. Then, the cock was opened and the polymerization tube was deaerated by a vacuum pump. Subsequently, the cock was closed again and the polymerization tube containing the reaction solution was placed in propanol to completely dissolve the sample in the polymerization tube. This operation was repeated three times (freeze-thaw deaeration). Thus, the polymerization tube in which the sample was thoroughly deaerated and was under reduced pressure was placed in a shaking thermostatic chamber at 70°C to effect radical polymerization for two hours and as a result, a copolymer having a carboxyl group at one terminal was obtained. After the reaction, the copolymer was reprecipitated by adding the reaction solution dropwise to ice-cooled diethyl ether to obtain a polymer. The resulting polymer was separated by filtration, dried under reduced pressure overnight at normal temperatures, then, dissolved in a THF solution and purified again in diethyl ether. The polymer thus obtained was separated by filtration, passed through a gel filtration column to dispense the desired polymer. The resulting polymer was freeze-dried, then dissolved in a THF solvent, reprecipitated and separated by filtration. The polymer thus obtained was dried overnight under reduced pressure at normal temperature to obtain the desired polymer.

### (1-1-b) Composing of Aminohexyl Cibacron Blue (hereinafter referred to as "AmCB") with Poly(IPAAm-co-ASI) Having Terminal Carboxyl Group

In 100 ml of pyridine were dissolved 5.0 g of the synthesized copolymer and 0.43 g of aminohexyl Cibacron Blue and stirred at room temperature for 24 hours, and 2 ml of isopropylamine was added thereto and the resulting solution was further stirred for 24 hours to compose aminohexyl Cibacron Blue with the copolymer. After completion of stirring, the solvent was removed by a rotary evaporator and the composite material was freeze-dried. After the drying, the composite material was dissolved in purified water to dispense the desired composite material by gel filtration which was then free-dried to obtain the desired polymer. The result of GPC indicated that the distribution of molecular weight of the composite material is in a range of 1.77-2.14.

### (1-1-c) Active Esterification (Succinylation) of Terminal Carboxyl Group of Poly(IPAAm-co-ASI) Having Terminal Carboxyl Group/Aminohexyl Cibacron Blue(AmCB) Composite Material [hereinafter referred to as "p(NIPAAm)-AmCB"]

In a 300 ml eggplant-shaped flask were placed 3 g of the synthesized copolymer, 0.5 g of N,N-dicyclohexylcarbodiimide and 0.5 g of N-hydroxysuccinimide and dissolved in 100 ml of THH and stirred at room temperature for 48 hours. The dicyclohexylurea to be separated out by a by-product during stirring was removed by filtration and the reaction product was finally reprecipitated in diethyl ether to obtain a p(NIPAAm)-AmCB composite material in which one terminal was succinylated.

### (1-1-d) Introduction to Carrier (1)

In 100 ml of 1,4-dioxane was dissolved 1.0 g of the succinylated p(NIPAAm)-AmCB composite material and fixed on aminopropyl silica gel at room temperature. After stirring the mixture for 24 hours, 1.0 g of fresh succinylated p(NIPAAm)-AmCB composite material was dissolved in 100 ml of 1,4-dioxane and then reacted with the resulting gel for 24 hours. This operation was repeated once again and finally, the reacted gel was separated by filtration and thoroughly washed with an organic solvent such as dimethylformamide and methanol or a 66.7 mM phosphoric acid buffer solution containing 100 mM to 500 mM NaCl to obtain the desired packing.

### (1-1-e) Introduction to Carrier (2)

To 0.65 g of the copolymer whose one terminal was carboxylated were added 30 mg of N-ethoxycarbonyl-2-ethoxy-1,2-dihydroquinoline (EEDQ), 0.8 g of aminopropyl silica and 100 ml of THF, subjected to N2 replacement for 30 minutes and then, stirred overnight at room temperature. After completion of the stirring, silica particles were separated by filtration. In the same manner, 0.6 g of the copolymer whose one terminal was carboxylated, 30 mg of N-ethoxycarbonyl-2-ethoxy-1,2-dihydroquinoline (EEDQ) and 100 ml of THF were added to the resulting silica particles and the mixture was subjected to N2 replacement for 30 minutes and then, stirred overnight at room temperature. After completion of the stirring, silica particles were separated by filtration and thoroughly washed with an organic solvent such as dimethylformamide and methanol or a 66.7 mM phosphoric acid buffer solution containing 100 mM to 500 mM NaCl to obtain a p(NIPAAm)-AmCB composite material-fixed silica column packing.

### 2. Column Packing

In a packing solvent prepared at a volume ratio of methanol:2-propanol:water of 1:1:1 was dispersed 0.6 g of the p(NIPAAm)-AmCB composite material-fixed silica and charged in a column packing packer. Packing into a stainless column of 4.6 × 30 mm was carried out at a pressure of 100 kg/cm² for the initial 25 ml and at a pressure of 400 kg/cm² for the rest.

### 3. Preparation of Sample

### (3-1) Preparation of Bovine Serum Albumin (BSA) Sample

BSA was dissolved in a 66.7 mM phosphoric acid buffer solution having a pH of 7.0 to adjust the concentration at 7.60 mg/ml.

### 4. HPLC Measuring Conditions

| | |
|---|---|
| Column | p(NIPAAm)-AmCB |
| Mobile Phase | 66.7 mM phosphoric acid buffer solution having a pH of 7.0 |
| Flow Rate | 0.2 ml/min |
| Temperature Condition | 40 °C to 2 °C |
| Measuring Wavelength | 280 nm |

### 5. Results

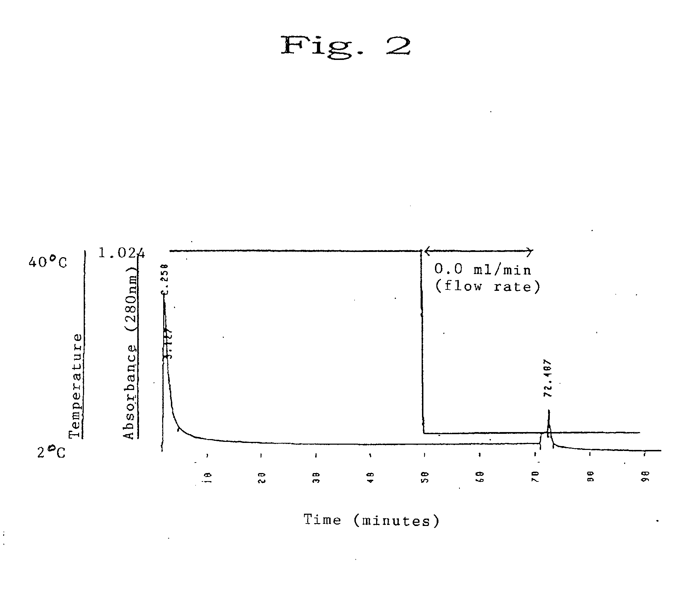

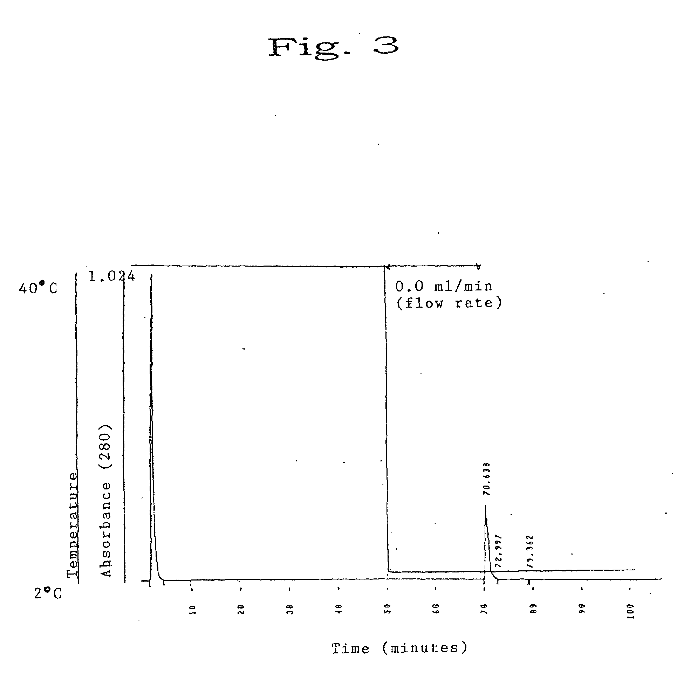

A typical chromatogram in the case of injecting 20 µl of a 7.6 mg/ml BSA solution into the p(NIPAAm)-AmCB column is shown in Fig. 2. After 50 minutes from the injection, the temperature was lowered from 40 °C to 2 °C. Further, to equilibrate the temperature at 2 °C, feeding of the solution was stopped for 20 minutes and then, the flow rate was returned to the initial flow rate of 0.2 ml/min. At 71.25 minutes the elution peak was observed and the eluate became brown under a micro BCA protein assay and the molecular weight was equal to that of BSA from the results of the analysis of the gel filtration chromatography and thus, it was confirmed that the elution peak was that of BSA. Further, an experiment using a silica column to which p(NIPAAm) alone had been fixed was carried out in the same manner as one using the p(NIPAAm)-AmCB column but BSA did not adhere and passed through the column as shown in Fig. 3. It was also confirmed by micro BCA protein assay that the peak at 70.9 minutes was not for BSA. Since this peak was also recognized in the case of a control sample free of BSA, it was thought that this peak was for impurities. From these results it was confirmed that the interaction between a target substance and a molecule interacting with the target substance by a temperature-stimulus could be controlled by a physical stimulus such as a temperature change.

### Example 3

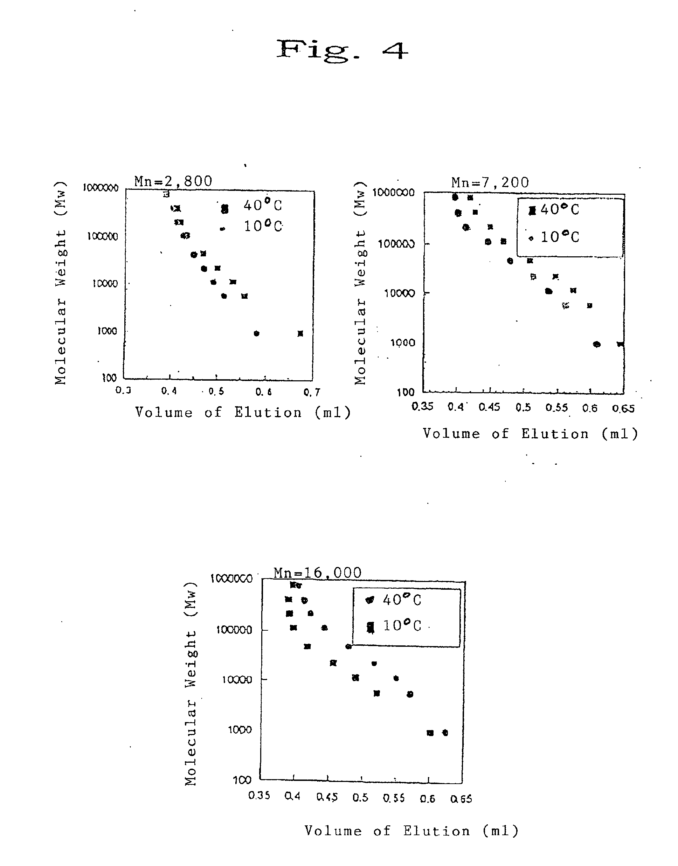

With the use of the technique described in Example 2, three types of carriers were synthesized by fixing a CB-poly(N-isopropyl acrylamide) composite material having a different molecular weight as shown in Table 1 on to silica gel. These three types carriers were packed in a stainless steel column, respectively, to prepare three types of columns. With the use of these three types of columns, with respect to pullulans having a different molecular weight as the target substances, calibration curves at 40°C and 10°C were measured (Fig. 4). It was suggested from the change in volume of elution by a temperature change that the change in the structure of the composite material was caused on the surface of the carrier. It was also found that by varying the molecular weight of the composite material to be fixed on to the carrier, different calibration curves could be obtained and thus, depending on the size of molecular weight of a stimulus-responsive polymer, the molecular weight of the pullulan to be fractionated differed in the respective carriers. From this result it was suggested that the size of molecular weight of the fixed composite material comprising a stimulus-responsive polymer affected the fractionation and adsorption of the target substance on the surface of the carrier and it was also shown that the size of the molecular weight of the target substance differently affected the fractionation and adsorption of the target substance. The elution conditions were as follows.

| | |
|---|---|
| Flow Rate | 0.2 ml/min |
| Temperatures | 10 °C and 40 °C |
| Column Size | 4.6 × 30 mm |
| Eluent | 66.7mM Phosphoric acid buffer solution having a pH of 7.0. |
| Sample | Pullulans |

Successively, with the use of these three types of columns, the elution experiment of BSA by varying temperature was conducted. Simultaneously, with the fixed composite polymers, the fixed amounts (increase in CHN amounts) were found by elementary analysis (analysis of CHN). Further, the amounts of CB contained in the composite materials were shown as the value to be presumed from the amount of the active ester before fixation. The results are set forth in Table 1. As would be clear from this Table, with smaller molecular weights of the fixed composite polymers, the amounts of elution after the temperature change were larger. From this result, it was suggested that the target substance of BSA was affected by the size of molecular weight of the composite material comprising a stimulus-responsive polymer on the surface of the carrier depending on the size of molecular weight of the fixed composite polymer and differed in the amount of adsorption and the elution the target substance by temperature change. It was also shown that the amount of non-specific adsorption was affected by the size of molecular weight of the composite material containing a stimulus-responsive polymer.

**Table 1**

| | | |
|---|---|---|
| Number Average Molecular 16,000 | 2,800 | 7,200 |
| Weight (Mn) (Mw/Mn) (1.77) | (1.83) | (2.14) |
| Amount of Active Ester 1.39 | 0.91 | 1.50 |
| Increase in Amount of CHN (%) 5.49 | 5.32 | 5.34 |
| Amount of Elution of BSA 0.002 (40°C - 2°C) (µg) | 3.38 | 0.32 |
| Amount of Non-specific 6.37 | 0.72 | 8.06 |
| Adsorption (µg) | | |

### Industrial Applicability

The separation method using the separatory material according to the present invention has the following advantages.
1) Different from the chemical elution methods employed in the conventional chromatographic techniques, no severe chemical condition is needed therein and thus a useful biopolymer can be recovered at a high yield.
2) By changing an interaction due to a physical stimulus, an interaction distinct from the inherent one with a target substance can be induced.
3) In the case of the separatory material of the present invention, no post-elution treatment (desalting, pH regulation, etc.) is needed, as in the case of the conventional affinity chromatography.
4) A packing can be quickly regenerated, compared with the conventional affinity chromatographic carriers.
5) There is no necessity that the stimulus-responsive polymer to be used has affinity with a substance interacting specifically with a target substance and thus, it is possible to use various stimulus-responsive polymers.
6) The fractionation and adsorption of a target substance can be controlled by the molecular weight of the stimulus-responsive polymer.
7) The fractionation and adsorption of a target substance can be performed according to the size of its molecular weight.

## Claims

1. A separatory material comprising a composite material containing a stimulus-responsive polymer and a substance interacting specifically with a target substance, wherein said stimulus-responsive polymer undergoes a structural change upon a physical stimulus so that the interaction of said substance interacting specifically with the target substance is affected by the chemical or physical environmental change, thereby causing a reversible change in the interaction force with the target substance due to the physical stimulus, which separatory material is **characterized in that** said stimulus-responsive polymer has no affinity with said substance interacting specifically with the target substance.

2. The separatory material as claimed in Claim 1 which is capable of fractionating and adsorbing said target substance according to the size of its molecular weight with the use of the size of molecular weight of said stimulus-responsive polymer and eluting the absorbed target substance by a physical stimulus.

3. The separatory material as claimed in Claim 1 or 2 which is capable of varying the amounts of adsorption and elution of said target substance.

4. The separatory material as claimed in Claim 3 which is capable of controlling the amounts of adsorption and elution of said target substance by the size of molecular weight of a composite material comprising a stimulus-responsive polymer.

5. The separatory material as claimed in any of Claims 1 to 4, wherein said physical stimulus is a temperature change.

6. The separatory material as claimed in any of Claims 1 to 5, wherein said stimulus-responsive polymer is a polyalkylamide polymer or copolymer having a terminal functional group, for example, an amino or carboxyl group.

7. A separation method for separating a target substance comprising using the separatory material as claimed in any of Claims 1 to 6.

8. A packing comprising the separatory material as claimed in any of Claims 1 to 6.

9. The packing as claimed in Claim 8 which is a chromatographic packing having a carrier the surface of which is chemically modified with a composite material comprising a stimulus-responsive polymer and a substance interacting specifically with a target substance.

10. A separation method for separating a target substance comprising using the packing as claimed in Claim 8 or 9.

11. The separation method as claimed in Claim 10, wherein water is used as a mobile phase.
